# EUROPEAN PATENT APPLICATION

(11) **EP 4 741 811 A1**
(43) Date of publication of application: **13.05.2026**
(21) Application number: 24211427.0
(22) Date of filing: 07.11.2024
(51) Int. Cl.: G01N 23/083, G01N 23/18, H01M 10/42, H01M 10/058, H01M 50/536

(54) **AN INSPECTION APPARATUS, AND A METHOD, FOR DETECTING A DEFECT IN AN ELECTRODE TAB OF AN ELECTRODE ASSEMBLY**

(71) Applicant: LG Energy Solution, Ltd., Seoul 07335 (KR)
(72) Inventor: CHOI, Jin Hyeong, 34122 Daejeon (KR); HONG, Jong Hyuk, 34122 Daejeon (KR); LEE, Gyu Sun, 34122 Daejeon (KR)
(74) Representative: BCKIP Part mbB

(57) **Abstract**

An inspection apparatus (100) for detecting a defect (30) in an electrode tab (20) of an electrode assembly (10), wherein the electrode tab (20) is provided at a longitudinal end of the electrode assembly (10). The inspection apparatus (100) comprises a radiation emitting means (110) configured to emit an x-ray or a beta ray towards the electrode tab (20) and a radiation measuring means (120; 120a, 120b, 120c), disposed opposite the radiation emitting means (110) so as to have the electrode tab (20) positioned therebetween. The radiation measuring means (120; 120a, 120b, 120c) is configured to measure an amount of the x-ray or the beta ray transmitted through the electrode tab (20). The inspection apparatus (100) further comprises a processor (130) configured to process a signal corresponding to the measured amount of the x-ray or the beta ray and determine a defect (30) based on the amount of the x-ray or the beta ray measured at a portion within the electrode tab (20).

## Description

### TECHNICAL FIELD

The present invention relates to an inspection apparatus for detecting a defect in an electrode tab of an electrode assembly, and a method for detecting a defect in an electrode tab of an electrode assembly.

More particularly, the present invention relates to an inspection apparatus for detecting a defect in an electrode tab of an electrode assembly, as well as a method for detecting a defect in an electrode tap of an electrode assembly, capable of effectively identifying a defective electrode tab and preventing an electrode assembly with the defective electrode tab from being transferred to downstream of the electrode assembly manufacturing process.

### BACKGROUND

Secondary batteries, or often called rechargeable batteries, can be discharged by being used and then restored to their original state by charging. Secondary batteries have recently been widely used as an energy source of wireless devices, such as a personal digital devices, mobile telephone, or notebook computer. Moreover, the secondary battery has attracted attention as an energy source of an electric vehicle, a hybrid electric vehicle, and the like, which are regarded as a solution to the air pollution problem caused by traditional gasoline or diesel vehicles using fossil fuel. Due to the apparent advantages of the secondary battery over other traditional energy sources, the application of secondary battery continuously becomes wider and the consumer's demands for the secondary battery is also increasing.

Among various secondary batteries, a lithium secondary battery is particularly widely used as an energy source for various electronic products because the lithium secondary battery shows a high energy density, a high operating voltage, as well as excellent storage and lifetime characteristics.

In the meantime, secondary batteries can be also classified depending on the shape of a battery case. For example, they may be classified into cylindrical or prismatic batteries, according to which an electrode assembly is embedded in a cylindrical or prismatic metal can. Furthermore, in case of pouch-type batteries, the electrode assembly is embedded in a pouch-type case of an aluminum laminate sheet.

The electrode assembly, embedded in the battery case, functions as a power generating element capable of charging and discharging. The electrode assembly comprises a positive electrode, a negative electrode, and a separator interposed between the positive and the negative electrodes.

The electrode assembly can be generally classified into a jelly-roll type and a stack type. In case of the j elly-roll type electrode assembly, a positive electrode and a negative electrode, which are long sheet-shaped and are coated with an active material, are wound along their longitudinal direction, having a separator interposed therebetween. On the other hand, in case of the stack type electrode assembly, a plurality of positive electrodes and negative electrodes of a predetermined size are sequentially stacked on top of the other, having a separator interposed therebetween.

Uncoated portions of the stacked electrodes form an electrode tab of the electrode assembly. In the processes of forming the electrode tab of the electrode assembly, however, a defect can occur to the electrode tab.

Accordingly, it would be advantageous to develop a technology capable of addressing the above technical problem.

### SUMMARY OF THE INVENTION

It is an objective of the present invention to provide an inspection apparatus/method for detecting a defect in an electrode assembly. The problem is at least partially solved or alleviated by the subject-matter of independent claims, wherein further examples are incorporated in dependent claims. One aspect of the present invention relates to an inspection apparatus for detecting a defect in an electrode tab of an electrode assembly. The electrode tab may be provided at a longitudinal end of the electrode assembly. The inspection apparatus comprises a radiation emitting means configured to emit an x-ray or a beta ray towards the electrode tab and a radiation measuring means, disposed opposite the radiation emitting means so as to have the electrode tab positioned therebetween. The radiation measuring means may be configured to measure an amount of the x-ray or the beta ray transmitted through the electrode tab. The inspection apparatus may further comprise a processor configured to process a signal corresponding to the measured amount of the x-ray or the beta ray and determine a defect if the amount of the x-ray or the beta ray measured at a portion within the electrode tab shows a drop by a predetermined threshold or more, compared to a reference value.

The present invention enables effectively identifying a defect in an electrode tab of an electrode assembly at an early stage, specifically as early as the electrode tab is formed through the tab welding process. In addition, it enables the process to be performed in non-destructive way.

According to an embodiment of the present invention, the reference value may be an average amount of the x-ray or the beta ray measured at neighboring portions within the electrode tab.

This enables the inspection apparatus of the present invention to achieve precise identification of a defect. For example, an electrode tab of an electrode assembly may have a non-uniform thickness within its surface, depending on locations. This may result from the plurality of unit electrode tabs forming the electrode tab, respective ones of which may have a non-uniform thickness at different locations within their surfaces. The afore-mentioned predetermined threshold value needs to be set large enough so that such a non-uniform thickness of an electrode tab is not identified as a defect. For example, the predetermined threshold value may be set approximately in the range of a thickness of one or two unit electrode tabs. By way of using the reference value set based on average measurement at neighboring portions, as well as the predetermined threshold value set as explained above, the inspection apparatus of the present invention can precisely identify a defect in an electrode tab, avoiding a fault detection, e.g., due to a varying thickness of the electrode tab.

According to an embedment of the present invention, the reference value may be a desired amount of the x-ray or the beta ray preset by a user.

In other words, the user is allowed to determine the reference value based on either previously recorded data or a product specification. Accordingly, the present invention enables the user to have, in a simple manner, a control over the process of identifying a defect in an electrode assembly, e.g., accuracy or speed.

According to an embodiment of the present invention, the inspection apparatus may further have a controller configured to repeatedly perform the inspection at a plurality of positions within the electrode tab by relatively moving the radiation emitting/measuring means with respect to the electrode tab.

Accordingly, the present invention can improve accuracy of the inspection by identifying a defect occurred even in a small and corner area of the electrode tab. In addition, this allows the inspection apparatus according to the present invention to be configured small and compact.

According to an embodiment of the present invention, the radiation emitting/measuring means may be relatively moved with respect to the electrode tab at least in the longitudinal direction of the electrode assembly.

Accordingly, the inspection apparatus in accordance with the present invention can have an improved accuracy and, if required, be even configured small and compact.

A further aspect of the present invention is directed to an inspection method for detecting a defect in an electrode tab of an electrode assembly. The electrode tab may be provided at a longitudinal end of the electrode assembly. The inspection method may comprise 1) emitting, by a radiation emitting means, an x-ray or a beta ray towards the electrode tab; 2) measuring, by a radiation measuring means, an amount of the x-ray or the beta ray transmitted through the electrode tab; and 3) determining a defect if the amount of the x-ray or the beta ray measured at a portion within the electrode tab shows a drop by a predetermined threshold or more, compared to a reference value.

Accordingly, the method in accordance with the present invention enables effectively identifying a defect in an electrode tab of an electrode assembly at an early stage, specifically as early as the electrode tab is formed through the tab welding process. In addition, it enables the process to be performed in non-destructive way.

According to an embodiment of the present invention, the reference value may be an average amount of the x-ray or the beta ray measured at neighboring portions within the electrode tab.

This enables the inspection method of the present invention to achieve precise identification of a defect. For example, an electrode tab of an electrode assembly may have a non-uniform thickness within its surface, depending on locations. This may result from the plurality of unit electrode tabs forming the electrode tab, respective ones of which may have a non-uniform thickness at different locations within their surfaces. The afore-mentioned predetermined threshold value needs to be set large enough so that such a non-uniform thickness of an electrode tab is not identified as a defect. For example, the predetermined threshold value may be set approximately in the range of a thickness of one or two unit electrode tabs. By way of using the reference value set based on average measurement at neighboring portions, as well as the predetermined threshold value set as explained above, the inspection method of the present invention can precisely identify a defect in an electrode tab, avoiding a fault detection, e.g., due to a varying thickness of the electrode tab.

According to an embodiment of the present invention, the reference value may be a desired amount of the x-ray or the beta ray preset by a user.

In other words, the user is allowed to determine the reference value based on either previously recorded data or a product specification. Accordingly, the present invention enables the user to have, in a simple manner, a control over the process of identifying a defect in an electrode assembly, e.g., accuracy or speed.

According to an embodiment of the present invention, the steps 1) and 2) may be repeatedly performed at a plurality of positions within the electrode tab by relatively moving the radiation emitting/measuring means with respect to the electrode tab.

Accordingly, the present invention can improve accuracy of the inspection by identifying a defect occurred even in a small and corner area of the electrode tab. In addition, this allows the inspection apparatus according to the present invention to be configured small and compact.

According to an embodiment of the present invention, the radiation emitting/measuring means may be relatively moved with respect to the electrode tab at least in the longitudinal direction of the electrode assembly.

Accordingly, the inspection method in accordance with the present invention can have an improved accuracy and, if required, be even configured small and compact.

According to an embodiment of the present invention, the inspection may be performed after - or preferably, immediately after - the electrode tab is formed by welding a plurality of single-layer electrode tabs of respective electrode sheets forming the electrode assembly.

By doing so, the present invention enables identifying a defect immediately after forming the electrode tab, before the electrode assembly moves further to the next process. In this case, the frequency of identification of defects in electrode tabs may be indicative of the status of the welding process. In case of a high frequency of defect identification, the user may check and perform maintenances on the welding process.

According to an embodiment of the present invention, the inspection may be performed after a lead is welded on the electrode tab.

Therefore, the present invention enables identifying a defect occurred during either the process of welding electrode tabs or the process of welding a lead to the electrode tabs.

The inspection apparatus, and the method, for detecting a defect in an electrode tab of an electrode assembly in accordance with the present invention enable effective identification of a defective electrode tab as early as the electrode tab is formed during the electrode manufacturing process. Hence, an improved detection accuracy of defective electrode tabs can be achieved. Moreover, electrode assemblies with a defective electrode tab can be removed from the production line at the earliest possible moment, not being transferred to downstream of the electrode assembly manufacturing process. Consequently, the throughput of the entire electrode assembly manufacturing process can be increased.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Figs. 1 and 2: schematically illustrate a welding process of a bundle of unit electrode tabs for forming an electrode tab of an electrode assembly in accordance with the related art,
- Fig. 3: is a schematic illustration of an inspection apparatus for detecting a defect in an electrode tab of an electrode assembly in accordance with an embodiment of the present invention,
- Fig. 4: schematically illustrates a cross-sectional view, seen from a lateral side, of an inspection apparatus for detecting a defect in an electrode tab of an electrode assembly, in accordance with an embodiment of the present invention, inspecting an electrode tab of a moving electrode assembly on a conveyor,
- Fig. 5: schematically illustrates an inspection apparatus for detecting a defect in an electrode tab of an electrode assembly, in accordance with an embodiment of the present invention, along with a diagram showing processing of signals obtained by the apparatus,
- Figs. 6(a) to 6(c): are schematic illustration of three variations of radiation measuring means in accordance with an embodiment of the present invention,
- Fig. 7: is a schematic illustration of an inspection apparatus for detecting a defect in an electrode tab of an electrode assembly, in accordance with an embodiment of the present invention.

### DETAILED DESCRIPTION OF EXEMPLARY EMBODIMENTS

Terms or words used in the present description and claims should not be restrictively interpreted as ordinary meanings or dictionary-based meanings, but should be interpreted as meanings and concepts consistent with the technical ideas of the present invention in the broadest possible way.

In the present disclosure, it should be understood that terms "comprises", "includes", "has", etc. specify the presence of stated features, numbers, steps, operations, elements, components, or combinations thereof, but do not preclude the presence or addition of one or more other features, numbers, steps, operations, elements, components, or combinations thereof.

Also, when a portion such as a layer, a film, an area, a plate, or the like is referred to as being "on" another portion, this includes not only the case in which the portion is "directly on" the another portion, but also the case in which still another portion is interposed therebetween. In contrast, when a portion such as a layer, a film, an area, a plate, or the like is referred to as being "below" another portion, this includes not only the case in which the portion is "directly below" the another portion, but also the case in which still another portion is interposed therebetween. In addition, to be disposed "on" in the present disclosure may include the case disposed at the lower portion as well as the upper portion.

Terms such as "first" and "second" may be used to describe various components, but the components should not be limited by the terms. The terms are used only for the purpose of distinguishing one component from another. For example, without departing from the scope of the present invention, a first component may be referred to as a second component, and similarly, the second component may also be referred to as the first component. Singular expressions include plural expressions unless the context clearly indicates otherwise.

In addition, the same reference numbers will be used throughout the drawings to refer to parts that perform similar functions or operations. In the case in which one part is said to be connected to another part in this disclosure, not only may the one part be directly connected to the other part, but also the one part may be indirectly connected to the other part via a further part. In addition, that a certain element is included does not mean that other elements are excluded, but means that such elements may be further included unless mentioned otherwise.

Hereinafter, an inspection apparatus, as well as a method, for detecting a defect in an electrode tab of an electrode assembly in accordance with the present invention will be described in detail with reference to the accompanying drawings.

An electrode sheet may have a structure in which an electrode mixture layer is coated on one side or both sides of a current collector layer.

The electrode mixture layer may be a slurry containing an active material, a binder, and a solvent, wherein the binder helps to hold the active material particles together and adhere them to the current collector layer. The active materials are components that undergo electrochemical reactions to store and release energy during the charge and discharge cycles in the secondary battery. For example, one or more of lithium cobalt oxide, lithium manganese oxide, lithium iron phosphate, nickel manganese, and nickel cobalt aluminum oxide may be used as a cathode active material. For example, one or more of graphite, lithium titanate, and silicon-based materials may be used as an anode active material.

The current collector layer may be a thin metal foil designed to conduct electric current between an electrochemical active material and an external circuit of the battery. For example, an aluminum layer may be is used for the cathode current collector, while a copper layer may be used for the anode current collector. An additional coating layer may be coated on the current collector layer to improve adhesion with the active materials, enhance corrosion resistance, or reduce electrical resistance.

The electrode mixture layer may be coated onto the current collector layer to the desired thickness in the desired area. The coated portion may be positioned in the middle of the electrode sheet along its width, and the uncoated portion may be positioned, e.g., at both sides of the coated portions. Various methods may be used for the coating process. For example, the slurry may be spread evenly across the surface of the current collector layer by a blade. The slurry may be extruded through a narrow slot die onto the moving current collector layer. The current collector may be dipped into the slurry and then withdrawn at a controlled speed. Otherwise, the slurry may be atomized and sprayed onto the current collector.

After coating the electrode mixture layer on the current collector layer, a process for increasing density of the coated electrode mixture layer is performed, typically being called a drying and pressing process. The process reduces the thickness of the electrode sheet to achieve the desired density, which enhances both the energy density and mechanical integrity of the electrode sheet. For example, a heavy roller with a heater may be used for pressing the electrode sheet. A pressure is to be exerted on the electrode sheet by the heavy roller during the process.

A process of called notching may be performed in areas of a non-coated portion of the electrode sheet for forming an electrode tab. During the notching process, a portion of the electrode sheet is selectively removed or cut to create an electrode tab where the coated electrode mixture is absent. The process may be done by using precision tools like lasers or mechanical dies. The electrode tab is designed to leave a specific area of the current collector layer for attaching an electrode lead. The electrode lead may be a strip of metal that will be used to connect the electrode tab to an external battery terminals. The electrode tab may be performed in a specific pattern, such as rectangular, U-shaped, or V-shaped cuts, to optimize the attachment of the electrode lead and ensure a good electrical connection.

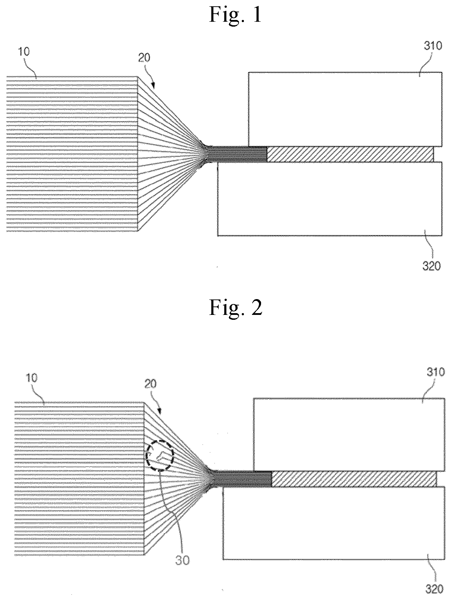

Figs. 1 and 2 schematically illustrate an exemplary apparatus for manufacturing an electrode assembly in accordance with the related art, particularly for forming an electrode tab of the electrode assembly.

Referring to Fig. 1, an electrode assembly 10 comprises a plurality of unit electrode cells, each of which is provided, at one end thereof, with an electrode tab of its own (hereinafter, referred to as "unit electrode tab"). Respective unit electrode tabs of the plurality of unit electrode cells are layered on top of one another and welded together through the process shown in Fig. 1, thereby forming an electrode tab 20 of the electrode assembly 10. The resultant welded electrode tab 20 is, if necessary, to be electrically connected to an electrode lead in the subsequent manufacturing process. When the electrode assembly 10 so manufactured is accommodated in a battery case in a sealed state, the electrode assembly 10 may be electrically connected to the outside directly through the electrode tab 20 or, depending on the cases, further through the electrode lead.

In order to form the electrode tab 20 by welding the unit electrode tabs, a tab welding apparatus 300 may be used, which performs ultrasonic welding on the bundle of layered unit electrode tabs. The welding apparatus 300 applies high-frequency (e.g., about 20 kHz) vibration generated by ultrasonic waves, while the unit electrode tabs 20 are fixedly placed between a horn 310 and an anvil 320. Herein, the ultrasonic wave can be generated by a rapid relative movement between the horn 310 and the anvil 320. During the process, the vibration energy is converted into thermal energy through frictional movement between layers of the unit electrode tabs; and this thermal energy enables welding of the unit electrode tabs on each other, consequently forming an electrode tab 20 of the electrode assembly 10.

In the welding process, however, a defect 30 may occur for various reasons, within the electrode tab 20 of the electrode assembly 10, as shown in Fig. 2. Among others, one exemplary cause for the defect 30 within the electrode tab 20 is the relative movement between the horn 310 and the anvil 320, which enables the welding. When the vibration force transmitted from the horn 310 and the anvil 320 is applied to the bundle of unit electrode tabs in the horizontal direction, a frictional movement occurs between the layers of the unit electrode tabs. This frictional movement, on the one hand, contributes to the desired welding of the unit electrode tabs. But on the other hand, the unit electrode tabs - particularly those of inner layers - can be deformed and damaged, for example, due to interaction of frictional forces exerted between different layers of the unit electrode tabs.

The problem lies in that the defect is difficult to identify. Particularly when a defect is located inside an electrode tab, it cannot be easily detected from outside without destroying the welded electrode tab.

In order to screen out such a defective electrode assembly, electrical properties of the manufactured electrode assemblies are measured once the electrode lead is connected to the electrode tab. However, measuring the electrical properties does not guarantee an effective screening-out of all possible defects existing in an electrode tab of an electrode assembly. This is because despite such a defect existing in an electrode tab of an electrode assembly, the electrical property of the defective electrode assembly may still meet the product specifications at the initial stage. However, the defect in the electrode tab can grow over time as the electrode assembly is used, possibly in the end shortening the lifespan of the electrode assembly and resulting in a reduced secondary battery performance.

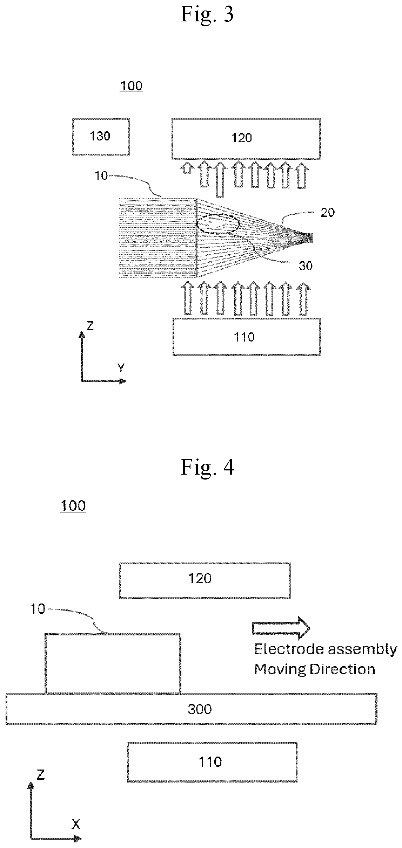

Fig. 3 illustrates an inspection apparatus for manufacturing an electrode assembly in accordance with an embodiment of the present invention.

The inspection apparatus may effectively identify a defect in an electrode tab of an electrode assembly at an early stage, specifically as early as the electrode tab is formed through the tab welding process.

An x-ray or a beta ray may be used for detecting a defect in the electrode tab of an electrode assembly, because using x-ray or beta ray has advantages in that it is a non-contact and non-destructive method preserving the integrity of the target material. Thus, the method can be used for detecting a defect in the electrode tab of an electrode assembly. The gaging apparatus may have a source part for emitting a ray and detecting part for measuring the intensity of radiation having passed through the target material. An x-ray tube or an x-ray generator may be used as a source for emitting x-ray, and Strontium-90 (Sr-90) or Krypton-85 (Kr-85) may be used as a source material of beta ray. As regards the detecting part, a scintillation detector or a semiconductor detector may be used as an exemplary x-ray detector, and on the other hand, a Geiger-Muller tube or a scintillation detector may be an example of a beta ray detector.

The electrode assembly 10, shown in Fig. 3, is subject to the inspection, after going through the tab welding process. The electrode assembly 10 has a structure in which a positive electrode, a separator, and a negative electrode are sequentially stacked on top of one another. The separator is positioned between the positive electrode and the negative electrode to electrically isolate the two electrodes of different polarities from each other. Each unit electrode cell, forming a single layer within the electrode assembly 10, has its own (unit) electrode tab at one terminal end - typically, at a longitudinal end - of its main body. Having gone through the tab welding process, the stacked unit electrode tabs are welded together, thereby forming an electrode tab 20 of the electrode assembly 10.

The inspection apparatus 100 of the present embodiment is particularly configured for detecting a defect 30 in an electrode tab 20 of an electrode assembly 10. The inspection apparatus 100, for example, includes a radiation emitting means 110 configured to emit an x-ray or a beta ray towards the electrode tab 20. Additionally, the inspection apparatus 100 also includes a radiation measuring means 120 configured to receive the x-ray or the beta ray from outside and measure its amount. The radiation emitting means 110 and the radiation measuring means 120 are disposed at opposite sides to face each other. Between the radiation emitting means 110 and the radiation measuring means 120 is provided a space, in which the subject of inspection, i.e., an electrode tab 20 of an electrode assembly 10, may be positioned.

The radiation measuring means 120 may be configured to receive the x-ray or the beta ray transmitted through the electrode tab 20 and measure its amount. The inspection apparatus 100 may further include a processor 130 configured to process a signal corresponding to the measured amount of the x-ray or the beta ray and determine whether or not there is a defect 30 in the electrode tab 20 based on an amount of the radiation detected at a specific position within the electrode tab 20.

The radiation to be used by the inspection apparatus 100 of the present invention may include, but not limited to, beta-ray and x-ray. In order for detecting a defect existing inside an electrode tab 20, which is formed by a plurality of stacked unit electrode tabs, high energy x-ray radiation is required. Since high x-ray energy can be harmful to humans, it is subject to strict safety requirements. Accordingly, typically an apparatus employing high x-ray energy is required to be built as a closed x-ray system. On the other hand, an apparatus employing beta-ray is not subject to such a strict safety requirement and, thus, a closed system is not required. Therefore, between the two types of radiations, beta-ray has an advantage over x-ray in that it is more suitable for a real time inspection that is performed while an electrode assembly 10 is moving, for example, on a conveyor 300 as shown in Fig. 4.

The existence of a defect 30 in the electrode tab 20 can be identified, for example, by measuring the absorption rate of the radiation at respective positions on the electrode tab 20. Assuming that a defect 30 exists at a specific position on one of the unit electrode tabs, as shown in Fig. 3, more beta particles can pass through the electrode tab 20 at the position corresponding to the defect 30, compared to other neighboring positions on the electrode tab 20. Therefore, more beta particles will in the end reach the radiation measuring means 120 at the position corresponding to the defect 30.

The radiation measuring means 120 may be an ionization chamber, which is filled with inert gas and connected to high voltage. An electrode in the chamber is connected to a sensitive amplifier and attracts the beta particles entering the radiation measuring means 120, after passing through the electrode tab 20. By this reaction, the electric current is amplified and converted to a voltage in proportion to the number of beta particles entering the radiation measuring means 120.

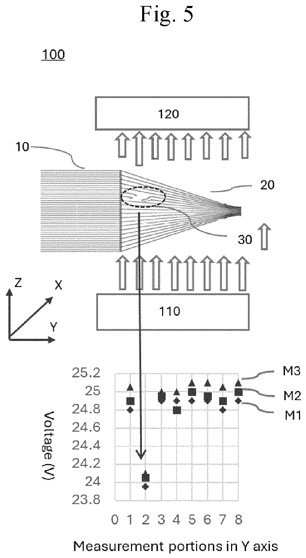

Fig. 5 schematically illustrates how the processor 130 processes signals corresponding to the amount of beta particles detected at multiple positions of the electrode tab 20 along the Y axis (i.e., along the longitudinal direction of the electrode tab 20). The amount of beta particles measured at respective positions is converted into a voltage signal value and recorded in a memory, preferably along with data identifying the corresponding position of measurement on the electrode tab 20.

The size of each measurement position and/or the distance between two neighboring measurement positions may be differently determined depending on various factors including, e.g., the specification of an electrode assembly 10. For example, not only the existence of a defect, but also a precise position of the defect is desired to be known, the number of measurement positions needs to be increased and/or the distance between neighboring measurement positions be reduced.

When a detailed image of the electrode tab including the defect or a precise position of the defect is desired, x-ray may be used as the radiation. On the other hand, in order for inspecting a moving electrode tab in real time, beta-ray may be preferred as the radiation, because the inspection apparatus 100 can have a simpler configuration, e.g., employing a moving conveyor 300. As an example, in the case of using beta-ray, the distance between measurement positions on the electrode tab 20 may be about 1 mm, whereas, in the case of using x-ray, the distance may be set preferably in the range of 100 µm to 200 µm, or depending on the circumstances, also less than 100 µm. In the meantime, a resolution of beta-ray may be, but not limited to, 1 mm x 1mm.

To increase the accuracy, the inspection may be performed repeatedly, more than two times at each respective measurement positions on the electrode tab 20. In this case, multiple measurement values M1, M2, and M3 may be obtained from a single measure position, as shown in Fig 5. Then, the processor 130 may derive a representative single value from those multiple measurement values M1, M2 and M3. For example, the processor 130 may calculate an average of the measurement values M1, M2, and M3, so as to subsequently determine whether or not a defect exists at the corresponding measurement position.

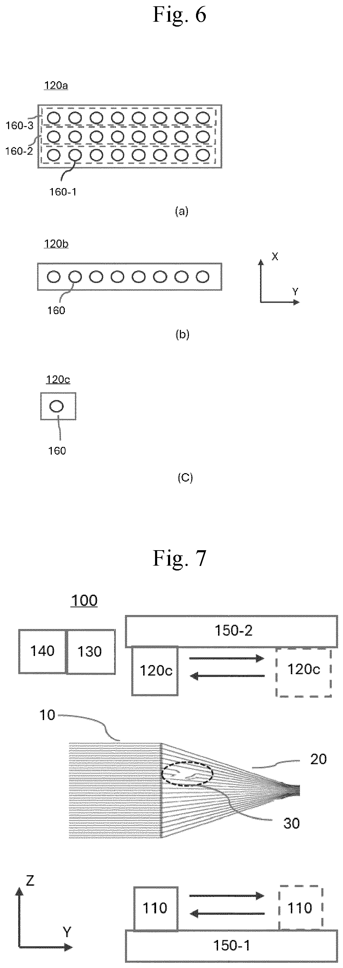

According to another embodiment of the present invention, the radiation measurement may be performed not only at multiple positions of the electrode tab 20 arranged along the Y-axis, but also at multiple positions along its perpendicular direction, i.e., along the X-axis. That is, radiation measurement may be performed at several different positions on the electrode tab 20 arranged along the width of the electrode tab 20. For this purpose, the radiation measuring means 120a includes multiple sensors 160 arranged not only along the Y-axis, but also along the X-axis, as shown in Fig. 6(a). In this case, M1, M2, and M3 may correspond to values obtained from different measurement portions arranged along the X-axis. For example, M1 corresponds to values measured by sensors 160-1 positioned in the lowest row within the radiation measuring means 120a in Fig. 6(a). M2 may correspond to values measured by sensors 160-2 positioned in the middle row. M3 may correspond to values measured by sensors 160-3 positioned in the top row in Fig. 6(a). The multiple rows of sensors 160-1, 160-2, 160-3 make the inspection apparatus 100 more accurately detect a defect 30, if the defect 30 is located not only in the middle of an electrode tab 20 along the width (X-axis), but at lateral sides thereof.

To determine whether a measured voltage value falls within the range of a defect, the processor 130 may compare the voltage value with a reference value or a predetermined threshold. The reference value may be, for example, an average of measurement values obtained from several neighboring measurement positions within the electrode tab. Otherwise, the reference value may be an absolute value, preset by a user in consideration the various factors, such as type of the radiation, specification of the electrode, etc.

According to yet another embodiment of the present invention, a radiation measuring means 120b may have a single row of multiple sensors 160 for measuring the radiation amounts; see Fig. 6(b). The radiation measuring means 120b in accordance with this embodiment may make a relative movement along the width direction of the electrode tab 20, i.e., along the X-axis in Fig. 6(b). The inspection using the apparatus of the present embodiment may be performed while having the electrode assembly 10 stand still at an inspection position. By moving the radiation measuring means 120b along the width direction of the electrode assembly, multiple measurement values M1, M2 and M3 along the width direction of the electrode tab may be obtained.

In the meantime, even if an inspection is performed in real time while the electrode assembly 10 moves on a conveyor 300, the multiple measurement values M1, M2 and M3 can be still obtained along the width direction of the electrode tab by appropriately setting the moving speed of the radiation measuring means 120b, relative to the moving speed of the electrode assembly 20 on the conveyor 300. For example, the moving speed of the radiation measuring means 120b may be set substantially higher than the moving speed of the electrode assembly 20 positioned on the conveyor 300.

According to still another embodiment of the present invention, a radiation measuring means 120c may have one sensor 160, as shown in Fig. 6(c). The radiation measuring means 120c and the radiation emitting means 110 may be respectively connected to movement systems 150-1 and 150-2, for example, railways as shown in Fig. 7. In addition, the apparatus may include a controller 140 configured to repeatedly perform inspection of the electrode tab 20 at a plurality of positions by moving the radiation emitting means 110 and the radiation measuring means 120c together, with respect to the electrode tab 20. Referring to Fig. 7, the radiation emitting means 110 and the radiation measuring means 120c may be relatively moved with respect to the electrode tab 20 at least in the longitudinal direction of the electrode assembly 10, and preferably also in the width direction of the electrode assembly 10. The controller 140 and the processor 130 may be configured as two individual units, or may also be integrated as a single unit.

According to a further aspect of the present invention, an inspection method of the electrode assembly is provided for detecting a defect in an electrode tab 20. According to the inspection method, an x-ray or a beta ray is emitted by a radiation emitting means 110 towards the electrode tab 20. Then, an amount of the x-ray or the beta ray transmitted through the electrode tab 20 is measured by a radiation measuring means 120.- Based on this measurement, a defect is determined if the amount of the x-ray or the beta ray measured at a portion within the electrode tab shows a drop by a predetermined threshold or more, compared to a reference value.

The emitting of an x-ray or a beta ray and measuring of their amount may be repeatedly performed at a plurality of positions within the electrode tab 20 by relatively moving the radiation emitting/measuring means with respect to the electrode tab 20.

The inspection method may be performed after the electrode tab is formed by welding a plurality of single-layer electrode tabs of respective unit electrode cells forming the electrode assembly.

Preferably, the inspection may be performed after a lead is welded on the electrode tab.

Although specific embodiments have been illustrated and described herein, it will be appreciated by those of ordinary skill in the art that a variety of alternate and/or equivalent implementations exist. It should be appreciated that the exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

### LIST OF REFERENCE SIGNS

10 electrode assembly
20 electrode tab
30 defect in an electrode tab
100 inspection apparatus
110 radiation emitting means
120, 120a, 120b, 120c radiation measuring means
130 processor
140 controller
150-1, 150-2 movement system
160, 160-1, 160-2, 160-3 sensor(s)
300 conveyor
310 horn
320 anvil

## Claims

1. An inspection apparatus for detecting a defect in an electrode tab of an electrode assembly, wherein the electrode tab is provided at a longitudinal end of the electrode assembly, the inspection apparatus comprising:
a radiation emitting means configured to emit an x-ray or a beta ray towards the electrode tab;
a radiation measuring means, disposed opposite the radiation emitting means so as to have the electrode tab positioned therebetween, wherein the radiation measuring means is configured to measure an amount of the x-ray or the beta ray transmitted through the electrode tab;
a processor configured to process a signal corresponding to the measured amount of the x-ray or the beta ray and determine a defect if the amount of the x-ray or the beta ray measured at a portion within the electrode tab shows a drop by a predetermined threshold or more, compared to a reference value.

2. The inspection apparatus of claim 1, wherein the reference value is an average amount of the x-ray or the beta ray measured at neighboring portions within the electrode tab.

3. The inspection apparatus of claim 1, wherein the reference value is a desired amount of the x-ray or the beta ray preset by a user.

4. The inspection apparatus of any one of claims 1 to 4, further comprising a controller configured to repeatedly perform the inspection at a plurality of positions within the electrode tab by relatively moving the radiation emitting/measuring means with respect to the electrode tab.

5. The inspection apparatus of claim 4,
wherein the radiation emitting/measuring means are relatively moved with respect to the electrode tab at least in the longitudinal direction of the electrode assembly.

6. An inspection method for detecting a defect in an electrode tab of an electrode assembly, wherein the electrode tab is provided at a longitudinal end of the electrode assembly, the inspection method comprising:
1) emitting, by a radiation emitting means, an x-ray or a beta ray towards the electrode tab;
2) measuring, by a radiation measuring means, an amount of the x-ray or the beta ray transmitted through the electrode tab;
3) determining a defect if the amount of the x-ray or the beta ray measured at a portion within the electrode tab shows a drop by a predetermined threshold or more, compared to a reference value.

7. The inspection method of claim 6,
wherein the reference value is an average amount of the x-ray or the beta ray measured at neighboring portions within the electrode tab.

8. The inspection method of claim 6, wherein the reference value is a desired amount of the x-ray or the beta ray preset by a user.

9. The inspection method of any one of claims 6 to 8,
wherein steps 1) and 2) are repeatedly performed at a plurality of positions within the electrode tab by relatively moving the radiation emitting/measuring means with respect to the electrode tab.

10. The inspection method of claim 9,
wherein the radiation emitting/measuring means are relatively moved with respect to the electrode tab at least in the longitudinal direction of the electrode assembly.

11. The inspection method of any one of claims 6 to 10, wherein the inspection is performed after the electrode tab is formed by welding a plurality of single-layer electrode tabs of respective electrode sheets forming the electrode assembly.

12. The inspection method of claim 11, wherein the inspection is performed after a lead is welded on the electrode tab.

## Amended claims

### Amended claims in accordance with Rule 137(2) EPC.

1. An inspection apparatus for detecting a defect in an electrode tab of an electrode assembly (10), wherein the electrode tab (20) is provided at a longitudinal end of the electrode assembly (10), the inspection apparatus (100) comprising:
a radiation emitting means (110) configured to emit beta particles towards the electrode tab (20);
a radiation measuring means (120), disposed opposite the radiation emitting means (110) so as to have the electrode tab (20) positioned therebetween, wherein the radiation measuring means (120) is configured to measure an amount of the beta particles transmitted through the electrode tab (20);
a processor (130) configured to process a voltage signal value corresponding to the measured amount of the beta particles and determine a defect (30) if the amount of the beta particles measured at a portion within the electrode tab (20) shows a drop by a predetermined threshold or more, compared to a reference value.

2. The inspection apparatus (100) of claim 1, wherein the reference value is an average of the voltage signal values measured at neighboring portions within the electrode tab (20).

3. The inspection apparatus (100) of claim 1, wherein the reference value is a desired voltage signal value preset by a user.

4. The inspection apparatus (100) of any one of claims 1 to 3, further comprising a controller (140) configured to repeatedly perform the inspection at a plurality of positions within the electrode tab (20) by relatively moving the radiation emitting (110)/measuring (120) means with respect to the electrode tab (20).

5. The inspection apparatus (100) of claim 4,
wherein the radiation emitting (110)/measuring (120) means are relatively moved with respect to the electrode tab (20) at least in the longitudinal direction of the electrode assembly (10).

6. An inspection method for detecting a defect (30) in an electrode tab (20) of an electrode assembly (10), wherein the electrode tab (20) is provided at a longitudinal end of the electrode assembly (10), the inspection method comprising:
1) emitting, by a radiation emitting means (110), beta particles towards the electrode tab (20);
2) measuring, by a radiation measuring means (120), an amount of the beta particles transmitted through the electrode tab (20);
3) determining a defect (30) if a voltage signal value corresponding to the amount of the beta particles measured at a portion within the electrode tab (20) shows a drop by a predetermined threshold or more, compared to a reference value.

7. The inspection method of claim 6,
wherein the reference value is an average of the voltage signal values measured at neighboring portions within the electrode tab (20).

8. The inspection method of claim 6, wherein the reference value is a desired voltage signal value preset by a user.

9. The inspection method of any one of claims 6 to 8,
wherein steps 1) and 2) are repeatedly performed at a plurality of positions within the electrode tab (20) by relatively moving the radiation emitting (110)/measuring (120) means with respect to the electrode tab (20).

10. The inspection method of claim 9,
wherein the radiation emitting (110)/measuring (120) means are relatively moved with respect to the electrode tab (20) at least in the longitudinal direction of the electrode assembly (10).

11. The inspection method of any one of claims 6 to 10, wherein the inspection is performed after the electrode tab (20) is formed by welding a plurality of single-layer electrode tabs of respective electrode sheets forming the electrode assembly (10).

12. The inspection method of claim 11, wherein the inspection is performed after a lead is welded on the electrode tab (20).
